Europäisches Patentamt

European Patent Office

Office européen des brevets

(11) Veröffentlichungsnummer: **0 467 193 A1**

# (12) EUROPÄISCHE PATENTANMELDUNG

(21) Anmeldenummer: **91111374.4**

(51) Int. Cl.5: **B60R 19/18**

(22) Anmeldetag: **09.07.91**

(30) Priorität: **18.07.90 DE 4022909**

(43) Veröffentlichungstag der Anmeldung:
**22.01.92 Patentblatt 92/04**

(84) Benannte Vertragsstaaten:
**BE DE ES FR GB IT SE**

(71) Anmelder: **BASF Aktiengesellschaft
Carl-Bosch-Strasse 38
W-6700 Ludwigshafen(DE)**

(72) Erfinder: **Lenz, Werner
Freyastrasse 9
W-6700 Ludwigshafen(DE)**
Erfinder: **Pirker, Alfred**

**Kalmitstrasse 7
W-6710 Frankenthal(DE)**
Erfinder: **Haardt, Udo
Darmstaedter Strasse 132
W-6843 Biblis(DE)**
Erfinder: **Domas, Friedrich
Hasenweg 4
W-6822 Altlussheim(DE)**
Erfinder: **Hartmann, Manfred
Sudermannstrasse 6
W-6700 Ludwigshafen(DE)**
Erfinder: **Deutsch, Werner
Roemerstrasse 3
W-8087 Tuerkenfeld(DE)**

(54) **Stossfänger für Kraftfahrzeuge.**

(57) Der Stoßfänger für Kraftfahrzeuge besteht aus einem biegesteifen Träger (1), einem am Träger anliegenden und lokale Ausnehmungen aufweisenden Absorberelement (3) aus Polymerschaum sowie einer das Absorberelement abdeckenden elastischen Schutzleiste (4). Zwecks Verringerung des Materialaufwandes und Anpassung an die geforderte Dämpfleistung sind in dem Absorberelement in Hauptkraftrichtung sich erstreckende Ausnehmungen (6,7,8) oder Durchbrüche (9) vorgesehen, welche zwischen sich orthogonale und/oder diagonale Stege (5) definieren. Die Stege bestehen vorzugsweise aus einem halbharten Polyurethanschaum einer Dichte von 110 bis 250 kg/m$^3$.

FIG. 2

EP 0 467 193 A1

FIG.1

Die Erfindung bezieht sich auf einen Stoßfänger für Kraftfahrzeuge mit einem biegesteifen Träger, einem am Träger anliegenden und lokale Ausnehmungen aufweisenden Absorbererlement aus Polymerschaum sowie einer das Absorberelement abdeckenden elastischen Schutzleiste.

Ein derartiger Stoßfänger ist aus Plastverarbeiter, 34. Jahrgang 1983, S. 516f bekannt. Das Absorberelement besteht dabei aus einem langgestreckten Polymerschaumkörper mit im wesentlichen konstantem Querschnitt und ist in der Lage, auftreffende Stöße so abzufangen, daß zumindest bei geringerer Aufprallenergie Beschädigungen des Fahrzeuges vermieden werden. Durch die Materialeigenschaften des Polymerschaumkörpers werden auch erlittene Verformungen nach einer gewissen Zeit selbst zurückgebildet. Nachteilig ist jedoch das verhältnismäßig hohe Gewicht sowie die beim Lastfall der außermittig auftreffenden Kraft nicht ausreichende Verformungsmöglichkeit.

Mit der Erfindung soll ein Stoßfänger für Kraftfahrzeuge geschaffen werden, der aus einfachen, leicht herstellbaren Bauteilen besteht und ein Absorberelement besitzt, das möglichst geringen Materialaufwand aufweist und ein leichtes Anpassen an die geforderte Dämpfleistung ermöglicht.

Diese Aufgabe wird dadurch gelöst, daß das Absorberelement in Hauptkraftrichtung sich erstreckende Ausnehmungen und/oder Durchbrüche aufweist, welche zwischen sich orthogonale und/oder diagonale Stege definieren.

Durch die erfindungsgemäße Ausrichtung der Stege tritt beim Lastfall ein Einknicken des Absorberelements praktisch nicht auf. Eine Abstimmung auf eine geforderte Dämpfkraft läßt sich durch eine entsprechende Wanddicke der Stege erreichen. Der Materialaufwand für das Absorberelement kann verhältnismäßig klein gehalten werden. Insgesamt sind Gewichtsersparnisse von bis zu 40 % möglich. Das Absorberelement ist einfach und leicht herstellbar und dementsprechend preiswert.

In vorteilhafter Weise kann der Stoßfänger so ausgebildet sein wie in den Ansprüchen 2 bis 5 angegeben. Insbesondere wenn die Ausbildung so erfolgt, wie in den Ansprüchen 4 und 5 angegeben, ist die Belastbarkeit des Stoßfängers besonders hoch. Halbharte Polyurethan-Schaumstoffe einer Dichte von zweckmäßig 110 bis 250 kg/m$^3$, vorteilhaft 150 bis 200 kg/m$^3$, können aufgrund ihrer hohen Stauchhärte große Aufprallkräfte aufnehmen und verteilen. Mit dem Ausschäumen der Ausnehmungen und/oder Durchbrüche des Absorberelements wird der Gefahr der Rippenabzeichnung bzw. der Entstehung von Einfallstellen auf der sichtbaren Oberfläche der das Absorberelement abdeckenden Schutzleiste begegnet. Geeignete Schaummaterialien hierfür sind beispielsweise expandiertes Polystyrol, expandiertes Polypropylen oder Polyurethan einer Dichte von 10 bis 30 kg/m$^3$.

Die Erfindung wird nachfolgend unter Hinweis auf die Zeichnungen näher erläutert.

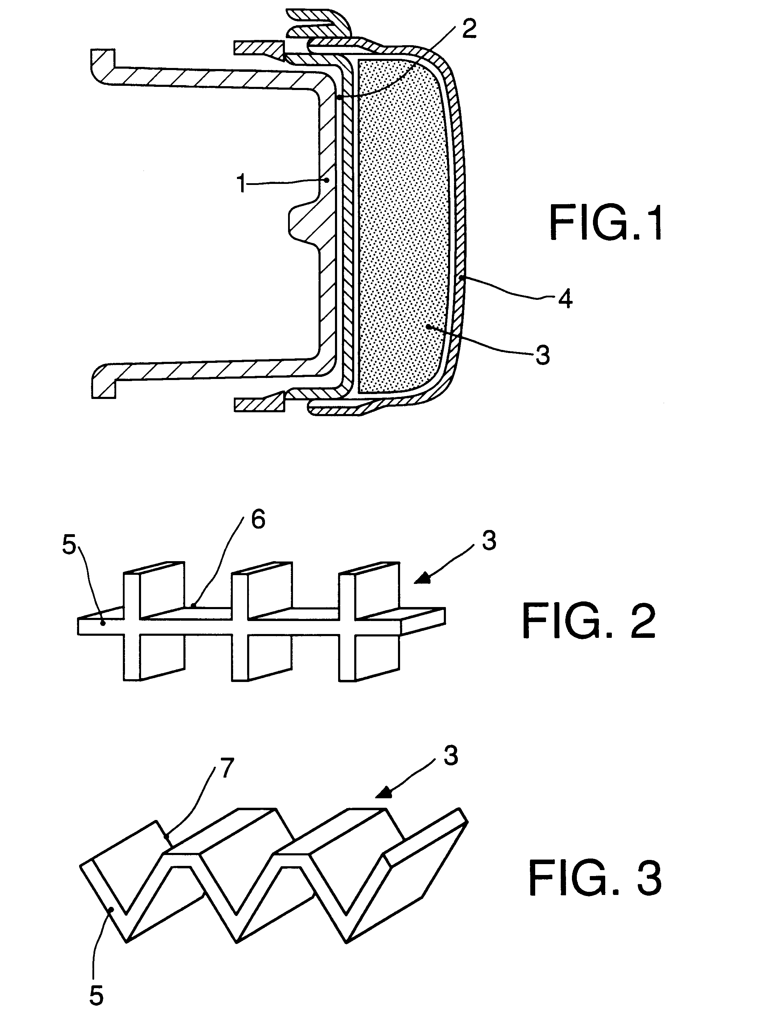

Im wesentlichen besteht der Stoßfänger aus einem offenen Träger (1) aus hochfestem Stahlblech oder einem glasmatten verstärkten Thermoplasten (GMT) und ist in Längsrichtung leicht gekrümmt. Die Trägerenden sind eingezogen. Der Träger ist im Querschnitt U-förmig ausgebildet, wobei der Steg (2) die Vorderseite des Stoßfängers bildet und eine glatte Fläche aufweist. An dieser Fläche stützt sich ein Absorberelement (3) ab, welches in Hauptkraftrichtung, d.h. in Fahrtrichtung sich erstreckende Ausnehmungen und/oder Durchbrüche aufweist. Mit (4) ist eine das Absorberelement abdeckende Schutzleiste bezeichnet (Figur 1).

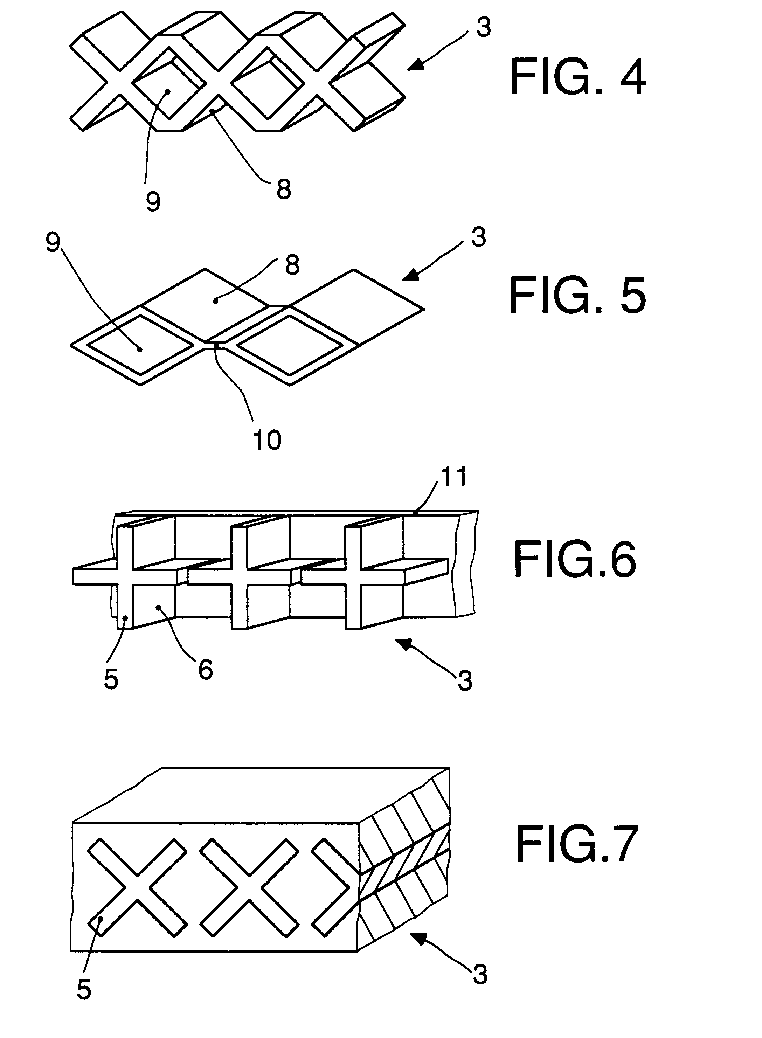

Gemäß Figur 2 besitzt das Absorberelement (3) mehrere Ausnehmungen (6), die zwischen sich orthogonal ausgerichtete Stege (5) definieren. Bei dem Ausführungsbeispiel nach der Figur 3 sind, bedingt durch entsprechende Ausnehmungen (7), die Stege (5) jeweils diagonal ausgerichtet, so daß ein sägezahnähnliches Profil entsteht. Weiterhin kann das Absorberelement (3) auch wabenförmige Ausnehmungen (8) bzw. Durchbrüche (9) enthalten, wobei zwischen jeweils zwei Waben auch ein Zwischensteg (10) eingefügt sein kann (Figuren 4 und 5). Ferner kann das durch orthogonale oder diagonale Stege (5) gebildete Absorberelement (3) mit einer Grundplatte (11) aus verhältnismäßig unelastischem Material festhafted verbunden sein, wodurch die Montage des Stoßfängers erheblich erleichtert ist (Figur 6). Das in Figur 7 gezeigte Absorberelement (3) besteht aus diagonal ausgerichteten Stegen (5), wobei die Zwischenräume zwischen den Stegen, d.h. die Ausnehmungen und Durchbrüche mit einem weichelastischen Kunststoff ausgeschäumt sind, so daß ein quaderförmiges Absorberelement mit Zonen unterschiedlicher Härte entsteht.

Das Absorberelement (3) kann einteilig ausgeführt sein oder aus zwei oder mehreren Teilen zusammengesetzt sein. Besondere Vorteile ergeben sich, wenn bei einem aus zwei Teilen zusammengesetzten Absorberelement die Trennebene zwischen den Teilen im wesentlichen mittig und senkrecht zu dem Träger (1) verläuft und die Teile unterschiedllich konturiert sind. Es kann dann bei nach oben oder unten versetztem Aufprall, der örtlich eine größere Flächenpressung und Stauchung zur Folge hat, der Formänderungswiderstand örtlich erhöht werden.

## Patentansprüche

1. Stoßfänger für Kraftfahrzeuge mit einem biegesteifen Träger, einem am Träger anliegenden und lokale Ausnehmungen aufweisenden Absorberelement aus Polymerschaum sowie einer das Absorberelement abdeckenden elastischen Schutzleiste, dadurch gekennzeichnet, daß das Absorberelement (3) in Hauptkraftrichtung sich erstreckende Ausnehmungen (6,7,8) und/oder Durchbrüche (9) aufweist, welche zwischen sich orthogonale und/oder diagonale Stege (5) definieren.

2. Stoßfänger nach Anspruch 1, dadurch gekennzeichnet, daß das Absorberelement (3) wabenförmige Ausnehmungen bzw. Durchbrüche (8,9) enthält.

3. Stoßfänger nach den Ansprüchen 1 und 2, dadurch gekennzeichnet, daß das Absorberelement (3) aus wenigstens zwei Teilen zusammengesetzt ist, wobei die Trennebene zwischen den Teilen im wesentlichen mittig und senkrecht zu dem Träger (1) verläuft und die Teile unterschiedlich konturiert sind.

4. Stoßfänger nach den Ansprüchen 1 bis 3, dadurch gekennzeichnet, daß das Absorberelement (3) aus einem halbharten Polyurethanschaum einer Dichte von 110 bis 250 kg/m$^3$ besteht.

5. Stoßfänger nach den Ansprüchen 1 bis 4, dadurch gekennzeichnet, daß die Ausnehmungen (6,7,8) und/oder Durchbrüche (9) des Absorberelements (3) mit Kunststoff ausgeschäumt sind.

FIG.1

FIG. 2

FIG. 3

FIG. 4

FIG. 5

FIG.6

FIG.7

Europäisches
Patentamt

# EUROPÄISCHER RECHERCHENBERICHT

Nummer der Anmeldung

EP    91 11 1374

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 836 188 (KLEES) | 1,2 | B60R19/18 |
| Y | * Spalte 3, Zeile 7 - Zeile 51; Abbildung 5 * | 3-5 | |
| | --- | | |
| Y | PATENT ABSTRACTS OF JAPAN vol. 9, no. 264 (M-423)(1987) 22. Oktober 1985 & JP-A-60 110 548 (NISSAN JIDOSHA K.K. ) 17. Juni 1985 * das ganze Dokument * | 3 | |
| | --- | | |
| Y | DE-A-2 433 137 (VOLKSWAGENWERK AG) 29. Januar 1976 * Seite 3, Zeile 3 - Zeile 20 * | 4 | |
| | --- | | |
| Y | DE-A-3 209 464 (DR. ING. H.C. F. PORSCHE AG) 29. September 1983 * Seite 4, Zeile 4 - Zeile 7 * * Seite 6, Zeile 1 - Zeile 3 * * Seite 6, Zeile 25 - Zeile 27 * | 5 | |
| | --- | | |
| X | US-A-3 995 901 (FILBERT, JR. ET AL.) 7. Dezember 1976 * Spalte 3, Zeile 33 - Zeile 55; Abbildung 4 * * Spalte 6, Zeile 44 - Zeile 59 * | 1 | RECHERCHIERTE SACHGEBIETE (Int. Cl.5) |
| | --- | | B60R |
| X | FR-A-2 443 351 (DAIMLER-BENZ AG) 9. Dezember 1978 * Seite 1, Zeile 1 - Zeile 7 * * Seite 2, Zeile 7 - Zeile 10 * * Seite 3, Zeile 27 - Zeile 33 * | 1 | |
| | --- | | |
| A | DE-A-2 509 265 (REGIE NATIONALE DES USINES RENAULT) 18. September 1975 * Seite 3, Zeile 16 - Seite 6, Zeile 25; Abbildungen * | 1,2 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 14 OCTOBER 1991 | AREAL CALAMA A. |

EPO FORM 1503 03.82 (P0403)